(19) Europäisches Patentamt
European Patent Office
Office européen des brevets

(11) **EP 4 155 355 A1**

(12) **EUROPEAN PATENT APPLICATION**
published in accordance with Art. 153(4) EPC

(43) Date of publication:
**29.03.2023 Bulletin 2023/13**

(21) Application number: **21834585.8**

(22) Date of filing: **25.06.2021**

(51) International Patent Classification (IPC):
**C09D 11/328** *(2014.01)*    **C09D 11/38** *(2014.01)*

(52) Cooperative Patent Classification (CPC):
**C09D 11/328; C09D 11/38**

(86) International application number:
**PCT/JP2021/024106**

(87) International publication number:
**WO 2022/004585 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2020 JP 2020111248**

(71) Applicant: **BROTHER KOGYO KABUSHIKI
KAISHA
Nagoya-shi, Aichi 467-8561 (JP)**

(72) Inventors:
• **YAMASHITA Narumi
Nagoya-shi, Aichi 467-8561 (JP)**

• **SUZUKI Nozomi
Nagoya-shi, Aichi 467-8561 (JP)**
• **TAHARA Tomoyo
Nagoya-shi, Aichi 467-8561 (JP)**
• **SAKAGUCHI Ai
Nagoya-shi, Aichi 467-8561 (JP)**
• **IGUCHI Makito
Nagoya-shi, Aichi 467-8561 (JP)**
• **TSUZAKA Yuka
Nagoya-shi, Aichi 467-8561 (JP)**

(74) Representative: **Prüfer & Partner mbB
Patentanwälte · Rechtsanwälte
Sohnckestraße 12
81479 München (DE)**

(54) **WATER-BASED INK FOR INKJET RECORDING AND INK CARTRIDGE**

(57)    Provided is a water-based ink for inkjet recording that is capable of improving the optical density (OD value) of a recorded article written with the water-based ink without the need to increase the colorant concentration. The water-based ink for inkjet recording, according to the present invention, is characterized by including: a colorant; water; an acidic preservative; and at least one of a surfactant and a penetrant. The acidic preservative includes, for example, at least one of: polyunsaturated fatty acid or polyunsaturated fatty acid salt; and dehydroacetic acid or dehydroacetic acid salt.

EP 4 155 355 A1

**Description**

**TECHNICAL FIELD**

The present invention relates to a water-based ink for inkjet recording and an ink cartridge.

**BACKGROUND TECHNOLOGY**

A method that increases coloring agent density is known as a method for improving the optical density (OD value) of a recorded matter made using a water-based ink (for example, see Patent Document 1).

**CITATION LIST**

**PATENT DOCUMENTS**

Patent Document 1: Japanese Unexamined Patent Application Publication No. 2004-231711

**SUMMARY OF THE INVENTION**

**PROBLEM TO BE SOLVED BY THE INVENTION**

However, when the coloring agent density is increased, there are problems in that cost increases, and the stability of the water-based ink is reduced.
Thus, an object of the present invention is to provide a water-based ink for inkjet recording which is capable of improving the optical density (OD value) of a recorded matter made using a water-based ink, without increasing the coloring agent density.

**MEANS FOR SOLVING THE PROBLEM**

To achieve the foregoing object, the water-based ink for inkjet recording of the present invention is characterized by including a dye, water, an acidic preservative, and at least one of a surfactant and penetrant.

**EFFECT OF THE INVENTION**

The water-based ink for inkjet recording of the present invention can improve the optical density (OD value) of a recorded matter made using a water-based ink without increasing the coloring agent density and can impart preservative properties, by including the acidic preservative in the formulation. The water-based ink for inkjet recording of the present invention is also improved in color saturation by including the acidic preservative in the formulation.

**BRIEF DESCRIPTION OF THE DRAWINGS**

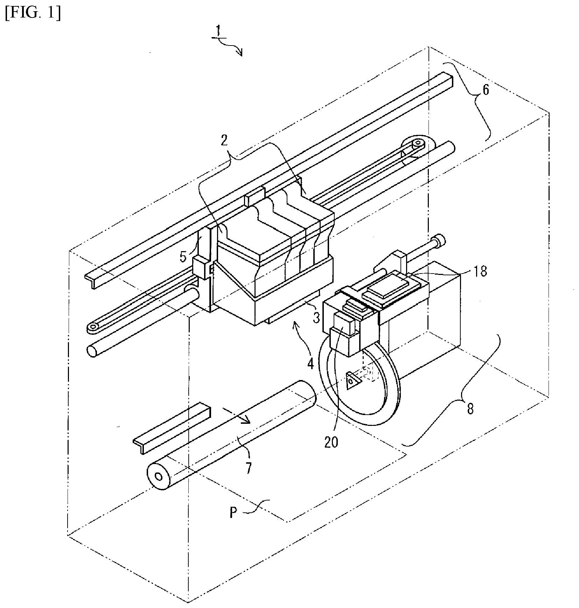

[FIG. 1] FIG. 1 is a schematic perspective view illustrating a configuration of one example of the inkjet recording device of the present invention.

**DESCRIPTION OF THE EMBODIMENTS**

In the present invention, saturation (C*) is calculated by the following formula from a* and b* based on the L*a*b* color system (CIE1976 (L*a*b*) color system) standard made by the International Commission on Illumination (CIE) in 1976 (see JIS Z 8729).

$$C* = \{(a*2)+(b*2)\}1/2$$

The water-based ink for inkjet recording of the present invention (hereinafter referred to as "water-based ink" or "ink") will be described. The water-based ink of the present invention includes a dye, water, an acidic preservative, and at least one of a surfactant and a penetrant.
The dye is not particularly limited, and examples include direct dyes, acidic dyes, basic dyes, reactive dyes, and the like. Specific examples of the dye include C.I. Direct Black, C.I. Direct Blue, C.I. Direct Red, C.I. Direct Yellow, C.I. Direct Orange, C.I. Direct Violet, C.I. Direct Brown, C.I. Direct Green, C.I. Acid Black, C.I. Acid Blue, C.I. Acid Red, C.I. Acid Yellow, C.I. Acid Orange, C.I. Acid Violet, C.I. Basic Black, C.I. Basic Blue, C.I. Basic Red, C.I. Basic Violet, C.I. Food Black, and the like. Examples of the C.I. Direct Black include C.I. Direct Black 17, 19, 32, 51, 71, 108, 146, 154, 168, and the like. Examples of the C.I. Direct Blue include C.I. Direct Blue 6, 22, 25, 71, 86, 90, 106, 199, and the like. Examples of the C.I. Direct Red include C.I. Direct Red 1, 4, 17, 28, 83, 227, and the like. Examples of the C.I. Direct Yellow include C.I. Direct Yellow 12, 24, 26, 86, 98, 132, 142, 173, and the like. Examples of the C.I. Direct Orange include C.I. Direct Orange 34, 39, 44, 46, 60, and the like. Examples of the C.I. Direct Violet include C.I. Direct Violet 47, 48, and the like. Examples of the C.I. Direct Brown include C.I. Direct Brown 109 and the like. Examples of the C.I. Direct Green include C.I. Direct Green 59 and the like. Examples of the C.I. Acid Black Include C.I. Acid Black 2, 7, 24, 26, 31, 52, 63, 112, 118, and the like. Examples of the C.I. Acid Blue include C.I. Acid Blue 9, 22, 40, 59, 90, 93, 102, 104, 117, 120, 167, 229, 234 and the like. Examples of the C.I. Acid Red include C.I. Acid Red 1, 6, 32, 37, 51, 52, 80, 85, 87, 92, 94, 115, 180, 256, 289, 315, 317, and the like. Examples of the C.I. Acid Yellow include C.I. Acid Yellow 11, 17, 23, 25, 29, 42, 61, 71, and the like. Examples of the C.I. Acid Orange include C.I. Acid Orange 7, 19, and the like. Examples of the C.I. Acid Violet include C.I. Acid Violet 49 and the like. Examples of the C.I. Basic Black include C.I. Basic Black 2 and the like. Examples of the C.I. Basic Blue include C.I. Basic Blue 1, 3, 5, 7, 9, 24, 25, 26, 28, 29, and the like. Examples of the C.I. Basic Red include C.I. Basic Red 1, 2, 9, 12, 13, 14, 37, and the like. Examples of the C.I. Basic Violet include C.I. Basic Violet 7, 14, 27, and the like. Examples of the C.I. Food Black include C.I. Food Black 1, 2, and the like.

The formulation amount of the dye with respect to the total amount of water-based ink is, for example, 0.1 to 20% by weight, preferably 0.3 to 10% by weight.

One type of the dye may be used alone, or two or more types may be used in combination.

The water is preferably de-ionized water or pure water. The amount of formulation amount of water (water ratio) with respect to the total amount of the water-based ink is appropriately determined according to desired ink characteristics and the like. The water ratio may be, for example, the remainder after other components.

As described above, the water-based ink of the present invention further includes an acidic preservative.

The acidic preservative preferably includes at least one of a polyvalent unsaturated fatty acid, a polyvalent unsaturated fatty acid salt, dehydroacetic acid, and a dehydroacetate. The polyvalent unsaturated fatty acid is preferably sorbic acid, and the polyvalent unsaturated fatty acid salt is preferably a sorbate. The sorbate preferably includes at least one of potassium sorbate and sodium sorbate. The dehydroacetate is preferably sodium dehydroacetate.

The acidic preservative may include another preservative (hereinafter referred to as "other preservative") in addition to or instead of at the least one of a polyvalent unsaturated fatty acid, a polyvalent unsaturated fatty acid salt, dehydroacetic acid, and a dehydroacetate. Examples of the other preservatives include salicylic acid, benzoic acid, benzoate, and the like.

One type of the acidic preservative may be used alone, or two or more types may be used in combination.

The formulation amount of the acidic preservative with respect to the total amount of water-based ink is not particularly limited and is, for example, 0.1 to 10% by weight, preferably 0.1 to 6% by weight, and more preferably 0.3 to 6.0% by weight. Furthermore, when the acidic preservative is at least one of dehydroacetic acid and a dehydroacetate, the formulation amount of the acidic preservative with respect to the total amount of water-based ink is, for example, 0.1 to 10% by weight, preferably 0.3 to 6% by weight, and more preferably 1.0 to 5.0% by weight.

As described above, the water-based ink of the present invention, by including the acidic preservative in the formulation, can improve the optical density (OD value) and saturation of a recorded matter made using a water-based ink without increasing the coloring agent density, and can impart preservative properties. The mechanism for improving the optical density (OD value) by adding the acidic preservative is, for example, presumed to be the following. When the acidic preservative is a polyvalent unsaturated fatty acid and/or a salt thereof, the polyvalent unsaturated fatty acid and/or the salt thereof has a lower molecular weight than the dye, and therefore is believed to penetrate the fibers of the recording medium prior to the dye. The polyvalent unsaturated fatty acid and/or the salt thereof has many carbon (C) double bonds (unsaturated bonds), and thus the polyvalent unsaturated fatty acid and/or the salt thereof can bind to components contained in the recording medium, and inhibit the dye from penetrating the deep fibers of the recording medium, enabling the dye to more readily remain on the surface of the recording medium. It is presumed that the optical density (OD value) and the saturation are improved as a result. Furthermore, it is presumed the surfactant promotes spreading of the dye along the fibers of the recording medium, and as a result, spaces between the dots are filled, improving the optical density (OD value) and the saturation. When the acidic preservative is dehydroacetic acid and/or a salt thereof, the dehydroacetic acid and/or the salt thereof and the dye are miscible in water. However, the solvent and the like soak into and evaporate on the surface of the recording medium, and thus the amount of water decreases. It is presumed that as a result, the dye agglomerates, improving the optical density (OD value) and the saturation. However, the mechanism is only a presumption, and the present invention is not limited thereto.

The water-based ink of the present invention can impart preservative properties without using industrial acidic preservatives and thus can be safely used without, for example, exerting adverse effects on the environment and the health of the human body.

The water-based ink further includes a surfactant. Examples of the surfactant include acetylene-based surfactants and the like.

For example, a commercial product may be used as the acetylene-based surfactant. Examples of the commercial products include "Olfine ® E1004," "Olfine ® E1008," and "Olfine ® E1010" made by Nissin Chemical Industry Co., Ltd., "Surfynol ® 440," "Surfynol ® 465," and "Surfynol ® 485" made by Air Products and Chemicals, Inc., "Acetylenol ® E40" and "Acetylenol ® E100" made by Kawaken Fine Chemicals Co., Ltd., and the like.

The water-based ink may contain another surfactant in addition to or instead of the acetylene-based surfactant. Examples of other surfactants include the nonionic surfactant "EMULGEN ®" series, "RHEODOL ®" series, "EMASOL ®" series, "EXCEL ®" series, "EMANON ®" series, "AMIET ®" series, "AMINON ®" series, and the like made by Kao Corporation, the nonionic surfactant "Sorbon ®" series and the like made by Toho Chemical Industry Co., Ltd., the nonionic surfactant "DOBANOX ®" series, "LEOCOL ®" series, "LEOX ®" series, "LAOL, LEOCOL ®" series, "LIONOL ®" series, "CADENAX ®" series, "LIONON ®" series, "LEOFAT ®" series, and the like made by Lion Corporation, the anionic surfactant "EMAL ®" series, "LATEMUL ®" series, "VENOL ®" series, "NEOPELEX ®" series, NS SOAP, KS SOAP, OS SOAP and "PELEX ®" series, and the like made by Kao Corporation, the anionic surfactant "LIPOLAN ®" series, "LIPON ®" series, "SUNNOL ®" series, "LIPOTAC ® TE, ENAGICOL" series, "LIPAL ®" series, "LOTAT ®" series, and the like made by Lion Corporation, the cationic surfactant "Catiogen ® ES-OW", "Catiogen ® ES-L," and the like made by DKS Co., Ltd. One type of the surfactant may be used alone, or two or more types may be used in combination.

The formulation amount of the surfactant is, for example, 0.01 to 5% by weight, preferably 0.05 to 5% by weight, and more preferably 0.05 to 3.0% by weight. In particular, the formulation amount of the acetylene-based surfactant with respect to the total amount of water-based ink is, for example, 0.01 to 5% by weight, preferably 0.05 to 3% by weight.

The formulation amount of the acidic preservative and the surfactant relative to the total amount of the water-based ink preferably satisfies the following Condition (X1) when the acidic preservative is, for example, at least one of a polyvalent unsaturated fatty acid and a polyvalent unsaturated fatty acid salt. The following Condition (X1) preferably has a lower limit of 1 or higher from the perspective of increasing the OD value and saturation. Furthermore, the following Condition (X1) is preferably 55 or less from the perspective of ink discharging stability.

$$\text{Condition (X1): } 1 \leq A1/B \leq 55$$

A1: Formulated amount of the acidic preservative (% by weight)
B: Formulated amount of the surfactant (% by weight)

Conversely, the formulation amount of the acidic preservative and the surfactant relative to the total amount of the water-based ink preferably satisfies the following Condition (X2) when the acidic preservative is, for example, at least one of dehydroacetic acid and a dehydroacetate. The following Condition (X2) preferably has a lower limit of 1 or higher from the perspective of increasing the OD value and saturation. Furthermore, the following Condition (X2) is preferably 60 or less from the perspective of ink discharging stability.

$$\text{Condition (X2): } 1 \leq A2/B \leq 60$$

A2: Formulated amount of the acidic preservative (% by weight)
B: Formulated amount of the surfactant (% by weight)

The water-based ink further includes a penetrant for regulating the drying rate on the recording medium.

The penetrant contains at least one of an alkylene diol and a glycol ether compound. Examples of the alkylene diol include 1,2-hexanediol, 1,2-heptanediol, 1,3-propanediol, 1,2-butanediol, 1,3-butanediol, 1,4-butanediol, 2,3-butanediol, 3-methyl-1,3-butanediol, 1,3-propanediol, 1,2-butanediol, 1,2-pentanediol, 1,4-butanediol, 1,5-pentanediol, 1,6-hexanediol, 2-methyl-2,4-pentanediol, and 3-methyl-1,5-pentanediol. Examples of the glycol ether compounds include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, tripropylene glycol-n-butyl ether, and the like. One type of the penetrant may be used alone, or two or more types may be used in combination.

The formulation amount of the penetrant with respect to the total amount of water-based ink is, for example, 1 to 20% by weight, preferably 1 to 15% by weight, and more preferably 1 to 10% by weight. In particular the formulation amount of at least one of the alkylene diol and the glycol ether compound with respect to the total amount of water-based ink is, for example, 1 to 20% by weight, preferably 1 to 15% by weight, and more preferably 1 to 10% by weight.

The formulation amount of the acidic preservative and the penetrant relative to the total amount of the water-based ink preferably satisfies the following Condition (Y1) when the acidic preservative is, for example, at least one of a polyvalent unsaturated fatty acid and a polyvalent unsaturated fatty acid salt. The following Condition (Y1) preferably has a lower limit of 0.1 or higher from the perspective of increasing the OD value and saturation. Furthermore, the following Condition (Y1) is preferably 10 or less from the perspective of ink discharging stability.

$$\text{Condition (Y1): } 0.1 \leq A1/C \leq 10$$

A1: Formulated amount of the acidic preservative (% by weight)
C: Formulated amount of the penetrant (% by weight)

Conversely, the formulation amount of the acidic preservative and the penetrant relative to the total amount of the water-based ink preferably satisfies the following Condition (Y2) when the acidic preservative is, for example, at least one of dehydroacetic acid and a dehydroacetate. The following Condition (Y2) preferably has a lower limit of 0.02 or higher from the perspective of increasing the OD value and saturation. Furthermore, the following condition (Y2) is preferably 6 or less from the perspective of ink discharging stability.

$$\text{Condition (Y2): } 0.02 \leq A2/C \leq 6$$

A2: Formulated amount of the acidic preservative (% by weight)
C: Formulated amount of the penetrant (% by weight)

The water-based ink may further contain a wetting agent for preventing drying of the water-based ink on the nozzle tip of the inkjet head.

The wetting agent is not particularly limited, and examples include lower alcohols such as methyl alcohol, ethyl alcohol, n-propyl alcohol, isopropyl alcohol, n-butyl alcohol, sec-butyl alcohol, tert-butyl alcohol; amides such as dimethylformamide and dimethylacetamide; ketones such as acetone; keto alcohols such as diacetone alcohol; ethers such as tetrahydrofuran and dioxane; polyethers such as polyalkylene glycol; polyhydric alcohols such as alkylene glycol, glycerin, trimethylolpropane, and trimethylol ethane; 2-pyrrolidone; N-methyl-2-pyrrolidone; 1,3-dimethyl-2-imidazolidinone; and the like. Examples of the polyalkylene glycol include polyethylene glycol, polypropylene glycol, and the like. Examples of the alkylene glycol include ethylene glycol, propylene glycol, butylene glycol, diethylene glycol, triethylene glycol, dipropylene glycol, tripropylene glycol, thiodiglycol, hexylene glycol, and the like. One type of these wetting agents may be used alone, or two or more types may be used in combination. Of these, polyhydric alcohols such as alkylene glycol, glycerin, and the like are preferable.

The formulation amount of the wetting agent with respect to the total amount of water-based ink is, for example, 0 to 95% by weight, preferably 5 to 80% by weight, and more preferably 5 to 50% by weight.

The water-based ink may further include conventionally known additives as necessary. Examples of the additives include pH adjusting agents, viscosity adjusting agents, surface tension adjusting agents, mildew-proofing agents, and the like. Examples of the viscosity adjusting agent include polyvinyl alcohol, cellulose, watersoluble resin, and the like.

Next, the ink cartridge of the present invention is characterized by including a water-based ink for inkjet recording, the water-based ink being the water-based ink for inkjet recording of the present invention. For example, a conventionally known body can be used as the body of the ink cartridge.

Next, the inkjet recording device and inkjet recording method of the present invention will be described.

The inkjet recording device of the present invention is an in inkjet recording device including an ink storage part and ink discharge means and which discharges ink stored in the ink storage part via the ink discharge means, wherein the water-based ink for inkjet recording of the present invention is stored in the ink storage part.

The inkjet recording method of the present invention is an inkjet recording method for recording by discharging a water-based ink onto a recording medium by an inkjet system, wherein the water-based ink for inkjet recording of the present invention is used as the water-based ink.

The inkjet recording method of the present invention can, for example, be performed by using the inkjet recording device of the present invention. The recording includes letter printing, image printing, printing, and the like.

FIG. 1 illustrates a configuration of one example of the inkjet recording device of the present invention. As illustrated, this inkjet recording device 1 includes four ink cartridges 2, ink discharging means (inkjet head) 3, a head unit 4, a carriage 5, a drive unit 6, a platen roller 7, and a purge device 8 as main components.

The four ink cartridges 2 include water-based inks in the four colors of yellow, magenta, cyan and black, each including one color. At least one of the four colors of water-based inks is the water-based ink for inkjet recording of the present invention. The inkjet head 3 installed in the head unit 4 records on a recording medium (for example, recording paper) P. The four ink cartridges 2 and the head unit 4 are mounted on the carriage 5. The drive unit 6 drives the carriage 5 back and forth in a linear direction. For example, a conventionally known drive unit (for example, see JP 2008-246821 A) can be used as the drive unit 6. The platen roller 7 extends in the reciprocating direction of the carriage 5 and is disposed opposing the inkjet head 3.

The purge device 8 sucks up defective ink containing bubbles or the like that accumulates in the inkjet head 3. For example, a conventionally known purge device (for example, see JP 2008-246821 A) can be used as the purge device 8.

A wiper member 20 is disposed adjacent to the purge device 8 on the platen roller 7 side of the purge device 8. The wiper member 20 is formed in a spatula shape and wipes the nozzle forming surface of the inkjet head 3 in conjunction with the movement of the carriage 5. In FIG. 1, in order to prevent drying of the water-based ink, the cap 18 covers a plurality of nozzles of the inkjet head 3 that is returned to a reset position when recording is completed.

The inkjet recording device 1 of the present example has four ink cartridges 2 mounted on one carriage 5 together with the head unit 4. However, the present invention is not limited thereto. Each of the four ink cartridges 2 of the inkjet recording device 1 may be installed on a separate carriage from the head unit 4. Each cartridge of the four ink cartridges 2 may be disposed and fixed within the inkjet recording device 1, rather than being mounted on the carriage 5. In these embodiments, for example, each of the four ink cartridges 2 and the head unit 4 mounted on the carriage 5 are connected by a tube or the like, and the water-based ink is supplied from each of the four ink cartridges 2 to the head unit 4.

Inkjet recording using this inkjet recording device 1 is, for example, performed as follows. First, the recording paper P is fed from a paper feeding cassette (not illustrated) provided to the side of or below of the inkjet recording device 1. The recording paper P is introduced between the inkjet head 3 and the platen roller 7. Predetermined recording is performed on the introduced recording paper P by using the water-based ink discharged from the inkjet head 3. The recording paper P is ejected from the inkjet recording device 1 after recording. The recorded matter recorded in the water-based ink of the present invention has a high optical density (OD value). Illustration of the paper feeding mechanism and paper ejecting mechanism of the recording paper P is omitted in FIG. 1.

The device illustrated in FIG. 1 adopts a serial inkjet head, but the present invention is not limited thereto. The inkjet recording device may employ a line-type inkjet head.

## EXAMPLES

Next, examples of the present invention will be described together with comparative examples. Note, the present invention is not limited or restricted by the following examples and comparative examples.

[Examples 1-1 to 1-10 and Comparative Examples 1-1 to 1-5]

Each component in the water-based ink composition (Tables 1 and 2) was uniformly mixed. Then, the obtained mixture was filtered using a hydrophilic polytetrafluoroethylene (PTFE) membrane filter (pore diameter 0.20 μm) made by Toyo Roshi Kaisha, Ltd. to obtain the water-based ink for inkjet recording in Examples 1-1 to 1-10 and Comparative Examples 1-1 to 1-5. Note, as shown in Table 1, Examples 1-1 to 1-10 used either potassium sorbate or sodium sorbate as the acidic preservative.

The water-based inks of Examples 1-1 to 1-10 and Comparative Examples 1-1 to 1-5 were subjected to (a) recording density evaluation, (b) saturation evaluation, and (c) preservative property evaluation according to the following methods.

(a) Recording Density Evaluation

The water-based inks of Examples 1-1 to 1-10 and Comparative Examples 1-1 to 1-5 were applied to a recording medium ("Multipaper Super White+" made by Askul Corporation) such that the application amount per unit area was approximately 0.90 mg/cm$^2$, producing an evaluation sample. Optical densities (OD value) of five locations in the evaluation sample were measured using a SpectroEye spectrophotometer (light source: D50, viewing angle: 2°, ANSI-T) made by X-Rite, Incorporated, and the average value was obtained. Next, the optical density (OD value) difference (ΔOD) was calculated by subtracting the optical density (OD value) in Comparative Example 1-1, in which the evaluation sample was produced using only a water-based cyan ink (C.I. Direct Blue 199) without using an acidic preservative, from the optical density (OD value) in Examples 1-1 to 1-9 and Comparative Examples 1-2 to 1-4. Similarly, the optical density (OD value) difference (ΔOD) was calculated by subtracting the optical density (OD value) in Comparative Example 1-5, in which the evaluation sample was produced using only a water-based magenta ink (C.I. Acid Red 289) without using an acidic preservative, from the optical density (OD value) in Example 1-10. The recording density was evaluated according to the following evaluation criteria.

Recording Density Evaluation: Evaluation Criteria

> A: Improvement of optical density (OD value) (ΔOD) was 0.03 or more.
> B: Improvement of optical density (OD value) (ΔOD) was 0.01 to 0.02.
> C: Improvement of optical density (OD value) (ΔOD) was 0 or less.

(b) Saturation Evaluation

The saturation (C*) of five locations in the evaluation sample in the recording density evaluation (a) was measured using the SpectroEye spectrophotometer, the average value was obtained, and the cyan and magenta saturation were evaluated according to the following evaluation criteria.

Cyan Saturation Evaluation: Evaluation Criteria

> A: Saturation (C*) was 51 or more.
> B: Saturation (C*) was 50 or more and less than 51.
> C: Saturation (C*) was 49 or less.

Magenta Saturation Evaluation: Evaluation Criteria

> A: Saturation (C*) was 72 or more.
> B: Saturation (C*) was 71 or more and less than 72.
> C: Saturation (C*) was 70 or less.

(c) Preservative Property Evaluation

The water-based inks of Examples 1-1 to 1-10 and Comparative Examples 1-1 to 1-5 were applied to a standard agar culture medium and stored for three days in a 35°C temperature environment. Then, it was visually checked whether a fungal colony had developed in the standard agar culture medium, and the preservative properties were evaluated according to the following evaluation criteria.

Preservative Property Evaluation: Evaluation Criteria

> A: No colonies developed
> C: A colony developed

Table 1 and Table 2 show the water-based ink composition and evaluation results of the water-based inks of Examples 1-1 to 1-10 and Comparative Examples 1-1 to 1-5.

[Table 1]

| | | | Example | | | | | | | | | |
|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 |
| Water-based ink composition (% by weight) | Dye | C.I. Direct Blue 199 | 3.0 | 3.0 | 3.0 | 3.0 | 3.0 | 3.0 | 3.0 | 3.0 | 3.0 | - |
| | | C. I. Acid Red 289 | - | - | - | - | - | - | - | - | - | 2.5 |
| | Preservative | Potassium sorbate (*1) | 5.0 | 3.0 | 0.5 | - | 5.0 | 5.0 | 5.0 | 5.0 | 5.0 | 5.0 |
| | | Sodium sorbate (*2) | - | - | - | 3.0 | - | - | - | - | - | - |
| | | Proxel GXL(s) (*3) | - | - | - | - | - | - | - | - | - | - |
| | | Sodium L-ascorbate (*4) | - | - | - | - | - | - | - | - | - | - |
| | Wetting agent | Glycerin | 20.0 | 20.0 | 20.0 | 20.0 | 15.0 | 20.0 | 20.0 | 20.0 | 20.0 | 15.0 |
| | | Propylene glycol | - | - | - | - | 5.0 | - | - | - | - | 5.0 |
| | Penetrant | Triethylene glycol n-butyl ether | 1.0 | 1.0 | 1.0 | - | - | - | - | - | 5.0 | 1.0 |
| | | 1,2-Hexanediol | - | - | - | 0.5 | 0.5 | 0.5 | 0.5 | - | - | - |
| | | 3-Methyl-1,5-pentanediol | - | - | - | 3.0 | 3.0 | 3.0 | 3.0 | - | - | - |
| | Surfactant | Olfine ® E1010 (*5) | 0.2 | 0.2 | 0.2 | 0.2 | 0.1 | - | 0.2 | 1.0 | - | 0.2 |
| | | Olfine ® E1004 (*6) | - | - | - | - | - | 0.2 | - | - | - | - |
| | Triethanolamine (*7) | | - | - | - | - | - | - | 0.3 | - | - | - |
| | Water | | Remainder | Remainder | Remainder | Remainder | Remainder | Remainder | Remainder | Remainder | Remainder | Remainder |
| Ratio | Acidic preservative / surfactant | | 25.0 | 15.0 | 2.5 | 15.0 | 50.0 | 25.0 | 25.0 | 5.0 | - | 25.0 |
| | Acidic preservative / penetrant | | 5.0 | 3.0 | 0.5 | 0.9 | 1.4 | 1.4 | 1.4 | - | 1.0 | 5.0 |
| Evaluation | Optical density (OD value) | | A (1.07) | A (1.06) | B (1.05) | A (1.14) | A (1.09) | A (1.10) | A (1.11) | A (1.06) | A (1.07) | A (1.02) |
| | Saturation (measured value) | | A (51) | A (51) | B (50) | A (52) | B (50) | A (52) | A (52) | A (51) | B (50) | A (72) |
| | Preservative performance | | A | A | A | A | A | A | A | A | A | A |

8

* 1: Made by Kanto Chemical Co., Ltd.
*2: Made by Kanto Chemical Co., Ltd.
*3: Made by Arch Chemicals, Inc.
*4: Made by Kanto Chemical Co., Ltd.
*5: Acetylene glycol-based surfactant (ethylene oxide (10 mol) adduct of diol): Nissin Chemical Industry Co., Ltd.; active ingredient = 100%
*6: Acetylene glycol-based surfactant (ethylene oxide (4 mol) adduct of diol): Nissin Chemical Industry Co., Ltd.; active ingredient = 100%
*7: Made by Kanto Chemical Co., Ltd.

[Table 2]

| | | | Comparative Example | | | | |
|---|---|---|---|---|---|---|---|
| | | | 1-1 | 1-2 | 1-3 | 1-4 | 1-5 |
| Water-based ink composition (% by weight) | Dye | C.I. Direct Blue 199 | 3.0 | 3.0 | 3.0 | 3.0 | - |
| | | C. I. Acid Red 289 | - | - | - | - | 2.5 |
| | Preservative | Potassium sorbate (*1) | - | 5.0 | - | - | - |
| | | Sodium sorbate (*2) | - | - | - | - | - |
| | | Proxel GXL(s) (*3) | - | - | 0.2 | - | - |
| | | Sodium L-ascorbate (*4) | - | - | - | 5.0 | - |
| | Wetting agent | Glycerin | 20.0 | 20.0 | 20.0 | 20.0 | 15.0 |
| | | Propylene glycol | - | - | - | - | 5.0 |
| | Penetrant | Triethylene glycol n-butyl ether | 1.0 | - | 1.0 | 1.0 | 1.0 |
| | | 1,2-Hexanediol | - | - | - | - | - |
| | | 3-Methyl-1,5-pentanediol | - | - | - | - | - |
| | Surfactant | Olfine ® E1010 (*5) | 0.2 | - | 0.2 | 0.2 | 0.2 |
| | | Olfine ® E1004 (*6) | - | - | - | - | - |
| | Triethanolamine (*7) | | - | - | - | - | - |
| | Water | | Remainder | Remainder | Remainder | Remainder | Remainder |
| Ratio | Sorbate / surfactant | | - | - | - | - | - |
| | Sorbate / penetrant | | - | - | - | - | - |
| Evaluation | | Optical density (OD value) | - (1.03) | B (1.04) | C (1.03) | A (1.09) | - (0.97) |
| | | Saturation (measured value) | C (49) | C (49) | B (50) | C (47) | C (70) |
| | | Preservative performance | C | A | A | C | C |

*1: Made by Kanto Chemical Co., Ltd.

*2: Made by Kanto Chemical Co., Ltd.

*3: Made by Arch Chemicals, Inc.

*4: Made by Kanto Chemical Co., Ltd.

*5: Acetylene glycol-based surfactant (ethylene oxide (10 mol) adduct of diol):

Nissin Chemical Industry Co., Ltd.; active ingredient = 100%

*6: Acetylene glycol-based surfactant (ethylene oxide (4 mol) adduct of diol):

Nissin Chemical Industry Co., Ltd.; active ingredient = 100%

*7: Made by Kanto Chemical Co., Ltd.

As shown in Table 1, the results of the recording density evaluation, saturation evaluation, and preservative property evaluation were all satisfactory in Examples 1-1 to 1-10.

Conversely, as shown in Table 2, the results of the saturation evaluation and preservative property evaluation were poor for Comparative Examples 1-1 and 1-5, which did not use the acidic preservative. Also, the saturation evaluation was poor for Comparative Example 1-2, which used neither the surfactant nor the penetrant. Furthermore, in Comparative Example 1-3, which used 1,2-dibenzinthiazolin-3-one (product name: PROXEL GXL from LONZA) instead of the acidic preservative, the results of the recording evaluation were poor. Moreover, the results of the saturation evaluation and preservative property evaluation were poor in Comparative Example 1-4, which used sodium ascorbate instead of the acidic preservative.

[Examples 2-1 to 2-14 and Comparative Examples 2-1 to 2-6]

Each component in the water-based ink composition (Tables 3 and 4) was uniformly mixed. Then, the obtained mixture was filtered using a hydrophilic polytetrafluoroethylene (PTFE) membrane filter (pore diameter 0.20 $\mu$m) made by Toyo Roshi Kaisha, Ltd. to obtain the water-based ink for inkjet recording in Examples 2-1 to 2-14 and Comparative Examples 2-1 to 2-6. Note, as shown in Table 3, Examples 2-1 to 2-14 used sodium dehydroacetate as the acidic preservative.

Other than performing the (a) recording density evaluation as follows, the water-based inks of Examples 2-1 to 2-14 and Comparative Examples 2-1 to 2-6 were subjected to (b) saturation evaluation, and (c) preservative property evaluation in the same manner as Examples 1-1 to 1-10 and Comparative Examples 1-1 to 1-5.

(a) Recording Density Evaluation

The water-based inks of Examples 2-1 to 2-14 and Comparative Examples 2-1 to 2-6 were applied to a recording medium ("Multipaper Super White+" made by Askul Corporation) such that the application amount per unit area was approximately 0.90 mg/cm$^2$, producing an evaluation sample. Optical densities (OD value) of five locations in the evaluation sample were measured using a SpectroEye spectrophotometer (light source: D50, viewing angle: 2°, ANSI-T) made by X-Rite, Incorporated, and the average value was obtained. Next, the optical density (OD value) difference ($\Delta$OD) was calculated by subtracting the optical density (OD value) in Comparative Example 2-1, in which the evaluation sample was produced using only a water-based cyan ink (C.I. Direct Blue 199) without using an acidic preservative, from the optical density (OD value) in Examples 2-1 to 2-13 and Comparative Examples 2-2 to 2-5. Similarly, the optical density (OD value) difference ($\Delta$OD) was calculated by subtracting the optical density (OD value) in Comparative Example 2-6, in which the evaluation sample was produced using only a water-based magenta ink (C.I. Acid Red 289) without using an acidic preservative, from the optical density (OD value) in Example 2-14. The recording density was evaluated according to the following evaluation criteria.

Recording Density Evaluation: Evaluation Criteria

A: Improvement of optical density (OD value) (ΔOD) was 0.03 or more.
B: Improvement of optical density (OD value) (ΔOD) was 0.01 to 0.02.
C: Improvement of optical density (OD value) (ΔOD) was 0 or less.

Table 3 and Table 4 show the ink composition and evaluation results of the water-based inks of Examples 2-1 to 2-14 and Comparative Examples 2-1 to 2-6.

[Table 3]

| | | | Example | | | | | | | | | | | | | |
|---|---|---|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-11 | 2-12 | 2-13 | 2-14 |
| Water-based ink composition (% by weight) | Dye | C.I. Direct Blue 199 | 3.0 | 3.0 | 3.0 | 3.0 | 3.0 | 3.0 | 3.0 | 3.0 | 3.0 | 3.0 | 3.0 | 3.0 | 3.0 | - |
| | | C. I. Acid Red 289 | - | - | - | - | - | - | - | - | - | - | - | - | - | 2.5 |
| | Preservative | Sodium dehydroacetate (*8) | 5.0 | 3.0 | 1.0 | 0.5 | 1.0 | 1.0 | 1.0 | 1.0 | 1.0 | 1.0 | 1.0 | 1.0 | 1.0 | 1.0 |
| | | Proxel GXL(s) (*3) | - | - | - | - | - | - | - | - | - | - | - | - | - | - |
| | | Kojic acid (*9) | - | - | - | - | - | - | - | - | - | - | - | - | - | - |
| | | Sodium L-ascorbate (*4) | - | - | - | - | - | - | - | - | - | - | - | - | - | - |
| | Wetting agent | Glycerin | 20.0 | 20.0 | 20.0 | 20.0 | 20.0 | 20.0 | 20.0 | 20.0 | 20.0 | 20.0 | 20.0 | 20.0 | 20.0 | 15.0 |
| | | Propylene glycol | - | - | - | - | - | - | - | - | - | - | - | - | - | 5.0 |
| | Penetrant | Triethylene glycol n-butyl ether | 1.0 | 1.0 | 1.0 | 1.0 | 1.0 | 1.0 | - | - | - | - | 0.5 | 11.0 | 3.0 | 1.0 |
| | | 1,2-Hexanediol | - | - | - | - | - | - | 1.0 | 0.5 | - | - | - | - | - | - |
| | | 3-Methyl-1,5-pentanediol | - | - | - | - | - | - | - | 3.0 | 5.0 | - | - | - | - | - |
| | Surfactant | Olfine ® E1010 (*5) | 0.2 | 0.2 | 0.2 | 0.2 | 0.1 | - | 0.2 | 0.2 | 0.2 | 1.0 | 0.2 | 0.2 | - | 0.2 |
| | | Olfine ® E1004 (*6) | - | - | - | - | - | 0.2 | - | - | - | - | - | - | - | - |
| | Water | | Remainder | Remainder | Remainder | Remainder | Remainder | Remainder | Remainder | Remainder | Remainder | Remainder | Remainder | Remainder | Remainder | Remainder |
| Ratio | Dehydroacetate / surfactant | | 25.0 | 15.0 | 5.0 | 3.0 | 10.0 | 5.0 | 5.0 | 5.0 | 5.0 | 1.0 | 5.0 | 5.0 | - | 5.0 |
| | Dehydroacetate / penetrant | | 5.0 | 3.0 | 1.0 | 1.0 | 1.0 | 1.0 | 1.0 | 0.3 | 0.2 | - | 2.0 | 0.1 | 0.3 | 1.0 |
| Evaluation | | Optical density (OD value) | A (1.12) | A (1.09) | A (1.06) | B (1.05) | B (1.05) | B (1.05) | A (1.07) | A (1.06) | B (1.05) | A (1.06) | B (1.05) | B (1.04) | A (1.06) | A (1.01) |
| | | Saturation (measured value) | A (53) | A (52) | A (51) | B (50) | B (50) | A (51) | A (52) | A (51) | A (51) | A (51) | B (50) | B (50) | A (51) | A (73) |
| | | Preservative performance | A | A | A | A | A | A | A | A | A | A | A | A | A | A |

EP 4 155 355 A1

*8: Made by Kanto Chemical Co., Ltd.

*3: Made by Arch Chemicals, Inc.

*9: Made by Tokyo Chemical Industry Co., Ltd.

*4: Made by Kanto Chemical Co., Ltd.

*5: Acetylene glycol-based surfactant (ethylene oxide (10 mol) adduct of diol): Nissin Chemical Industry Co., Ltd.; active ingredient = 100%

*6: Acetylene glycol-based surfactant (ethylene oxide (4 mol) adduct of diol): Nissin Chemical Industry Co., Ltd.; active ingredient = 100%

[Table 4]

| | | | Comparative Example | | | | | |
|---|---|---|---|---|---|---|---|---|
| | | | 2-1 | 2-2 | 2-3 | 2-4 | 2-5 | 2-6 |
| Water-based ink composition (% by weight) | Dye | C.I. Direct Blue 199 | 3.0 | 3.0 | 3.0 | 3.0 | 3.0 | - |
| | | C. I. Acid Red 289 | - | - | - | - | - | 2.5 |
| | Preservative | Sodium dehydroacetate (*8) | - | 1.0 | - | - | - | - |
| | | Proxel GXL(s) (*3) | - | - | 0.2 | - | - | - |
| | | Kojic acid (*9) | - | - | - | - | 5.0 | - |
| | | Sodium L-ascorbate (*4) | - | - | - | 5.0 | - | - |
| | Wetting agent | Glycerin | 20.0 | 20.0 | 20.0 | 20.0 | 20.0 | 15.0 |
| | | Propylene glycol | - | - | - | - | - | 5.0 |
| | Penetrant | Triethylene glycol n-butyl ether | 1.0 | - | 1.0 | 1.0 | 1.0 | 1.0 |
| | | 1,2-Hexanediol | - | - | - | - | - | - |
| | | 3-Methyl-1,5-pentanediol | - | - | - | - | - | - |
| | Surfactant | Olfine ® E1010 (*5) | 0.2 | - | 0.2 | 0.2 | 0.2 | 0.2 |
| | | Olfine ® E1004 (*6) | - | - | - | - | - | - |
| | Water | | Remainder | Remainder | Remainder | Remainder | Remainder | Remainder |
| Ratio | Dehydroacetate / surfactant | | - | - | - | - | - | - |
| | Dehydroacetate / penetrant | | - | - | - | - | - | - |
| Evaluation | | Optical density (OD value) | - (1.03) | B (1.04) | C (1.03) | A (1.09) | C (1.02) | - (0.97) |
| | | Saturation (measured value) | C (49) | C (49) | B (50) | C (47) | C (46) | C (70) |
| | | Preservative performance | C | A | A | C | C | C |

*8: Made by Kanto Chemical Co., Ltd.

*3: Made by Arch Chemicals, Inc.

*9: Made by Tokyo Chemical Industry Co., Ltd.

*4: Made by Kanto Chemical Co., Ltd.

*5: Acetylene glycol-based surfactant (ethylene oxide (10 mol) adduct of diol): Nissin Chemical Industry Co., Ltd.; active ingredient = 100%

*6: Acetylene glycol-based surfactant (ethylene oxide (4 mol) adduct of diol): Nissin Chemical Industry Co., Ltd.; active ingredient = 100%

As shown in Table 3, and the results of the recording density evaluation and preservative property evaluation were all satisfactory in Examples 2-1 to 2-14.

Conversely, as shown in Table 4, the results of the saturation evaluation and preservative property evaluation were poor for Comparative Examples 2-1 and 2-6, which did not use the acidic preservative. Also, the saturation evaluation was poor for Comparative Example 2-2, which used neither the surfactant nor the penetrant. Furthermore, in Comparative Example 2-3, which used 1,2-dibenzinthiazolin-3-one (product name: PROXEL GXL from LONZA) instead of the acidic preservative, the results of the recording evaluation were poor. Moreover, the results of the saturation evaluation and preservative property evaluation were poor in Comparative Example 2-4, which used sodium ascorbate instead of the acidic preservative. Moreover, the results of the recording density evaluation, saturation evaluation, and preservative property evaluation were poor in Comparative Example 2-5, which used kojic acid instead of the acidic preservative.

## INDUSTRIAL APPLICABILITY

As described above, the water-based ink of the present invention can improve the optical density (OD value) and saturation of a recorded matter made using a water-based ink without increasing the coloring agent density and can impart preservative properties. The applications of the water-based ink of the present invention are not particularly limited, and it can be widely applied to various types of inkjet recording.

## REFERENCE SIGNS LIST

1    Inkjet recording device
2    Ink cartridge
3    Ink discharge means (inkjet head)
4    Head unit
5    Carriage
6    Drive unit
7    Platen roller
8    Purge device

## Claims

1. A water-based ink for inkjet recording, comprising a dye, water, an acidic preservative, and at least one of a surfactant and a penetrant.

2. The water-based ink for inkjet recording according to claim 1, wherein the acidic preservative is at least one of a polyvalent unsaturated fatty acid, a polyvalent unsaturated fatty acid salt, dehydroacetic acid, and a dehydroacetate.

3. The water-based ink for inkjet recording according to claim 2, wherein the polyvalent unsaturated fatty acid is sorbic acid,
and the polyvalent unsaturated fatty acid salt is a sorbate.

4. The water-based ink for inkjet recording according to claim 3, wherein the sorbate includes at least one of potassium sorbate and sodium sorbate.

5. The water-based ink for inkjet recording according to any one of claims 2 to 4, wherein the dehydroacetate is sodium dehydroacetate.

6. The water-based ink for inkjet recording according to any one of claims 1 to 5, wherein the content of the acidic preservative is 0.3% by mass to 6.0% by mass.

7. The water-based ink for inkjet recording according to any one of claims 1 to 6, wherein the acidic preservative is at least one of dehydroacetic acid and a dehydroacetate, and the content of at least one of the dehydroacetic acid and the dehydroacetate is 1.0% by mass to 5.0% by mass.

8. The water-based ink for inkjet recording according to any one of claims 1 to 7, wherein the surfactant is an acetylene-based surfactant.

9. The water-based ink for inkjet recording according to any one of claims 1 to 8, wherein the content of the surfactant is 0.05% by mass to 3.0% by mass.

10. The water-based ink for inkjet recording according to any one of claims 1 to 9, wherein the penetrant includes at least one of an alkylene diol and a glycol ether compound.

11. The water-based ink for inkjet recording according to any one of claims 1 to 10, wherein the formulation amount of the penetrant is 1.0% by mass to 10.0% by mass.

12. The water-based ink for inkjet recording according to claim 10 or 11, wherein at least one of the alkylene diol and the glycol ether compound is at least one selected from the group consisting of 1,2-hexanediol, 3-methyl-1,5-pentanediol, and triethylene glycol-n-butyl ether (BTG).

13. The water-based ink for inkjet recording according to any one of claims 1 to 12, wherein,

when the acidic preservative is at least one of a polyvalent unsaturated fatty acid and a polyvalent unsaturated fatty acid salt, the formulation amounts of the acidic preservative and the surfactant satisfy the following Condition (X1), and
when the acidic preservative is at least one of dehydroacetic acid and a dehydroacetate, the formulation amounts of the acidic preservative and the surfactant satisfy the following Condition (X2):

$$\text{Condition (X1): } 1 \leq A1/B \leq 55$$

A1: Formulated amount of the acidic preservative (% by weight)
B: Formulated amount of the surfactant (% by weight)

$$\text{Condition (X2): } 1 \leq A2/B \leq 60$$

A2: Formulated amount of the acidic preservative (% by weight)
B: Formulated amount of the surfactant (% by weight).

14. The water-based ink for inkjet recording according to any one of claims 1 to 13, wherein,

when the acidic preservative is at least one of a polyvalent unsaturated fatty acid and a polyvalent unsaturated fatty acid salt, the added amounts of the acidic preservative and the penetrant satisfy the following Condition (Y1), and
when the acidic preservative is at least one of dehydroacetic acid and a dehydroacetate, the added amounts of the acidic preservative and the penetrant satisfy the following Condition (Y2):

$$\text{Condition (Y1): } 0.1 \leq A1/C \leq 10$$

A1: Formulated amount of the acidic preservative (% by weight)
C: Formulated amount of the penetrant (% by weight)

$$\text{Condition (Y2): } 0.02 \leq A2/C \leq 6$$

A2: Formulated amount of the acidic preservative (% by weight)
C: Formulated amount of the penetrant (% by weight).

[FIG. 1]

**EP 4 155 355 A1**

<table>
<tr><td colspan="2" align="center">INTERNATIONAL SEARCH REPORT</td><td>International application No.</td></tr>
<tr><td colspan="2"></td><td>PCT/JP2021/024106</td></tr>
</table>

**A. CLASSIFICATION OF SUBJECT MATTER**
C09D 11/328(2014.01)i; C09D 11/38(2014.01)i
FI: C09D11/38; C09D11/328

According to International Patent Classification (IPC) or to both national classification and IPC

**B. FIELDS SEARCHED**

Minimum documentation searched (classification system followed by classification symbols)
C09D11/328; C09D11/38

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2018-538387 A (COMMART CO., LTD.) 27 December 2018 (2018-12-27) claims, paragraphs [0021], | 1-7, 9-11, 13, 14 |
| Y | experiment examples 5, 6 | 1-14 |
| X | CN 105400292 A (SHANGHAI ANOKY GROUP CO., LTD.) 16 March 2016 (2016-03-16) claims, examples 1-5, 7, 9 | 1-7, 9-11, 13, 14 |
| Y | | 1-14 |
| X | CN 109627848 A (ZHENGZHOU HONGSHENG DIGITAL TECHNOLOGY CO., LTD.) 16 April 2019 (2019-04-16) | 1-7, 9-11, 13, 14 |
| Y | claims, examples 4, 5 | 1-14 |
| X | JP 6-33006 A (RICOH CO., LTD.) 08 February 1994 (1994-02-08) claims, examples 2, 3 | 1-7, 9, 13 |
| Y | | 1-14 |

☒ Further documents are listed in the continuation of Box C. ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 August 2021 (13.08.2021) | 31 August 2021 (31.08.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

18

**INTERNATIONAL SEARCH REPORT**

International application No.

PCT/JP2021/024106

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | JP 64-69381 A (RICOH CO., LTD.) 15 March 1989 (1989-03-15) claims, examples 1, 2 | 1-7, 10, 11, 14<br>1-14 |
| X<br>Y | JP 61-101572 A (RICOH CO., LTD.) 20 May 1986 (1986-05-20) claims, examples 1-5 | 1-7, 10, 11, 14<br>1-14 |
| X<br>Y | JP 61-101574 A (RICOH CO., LTD.) 20 May 1986 (1986-05-20) claims, examples 1-5 | 1-7, 10, 11, 14<br>1-14 |
| Y | JP 2005-307184 A (SEIKO EPSON CORP.) 04 November 2005 (2005-11-04) claims, examples 10, 12, 14, 19, 30, 32, 34, 39, 41 | 1-14 |
| Y | JP 2002-249693 A (FUJI XEROX CO., LTD.) 06 September 2002 (2002-09-06) claims, examples 1-20 | 1-14 |
| Y | JP 2000-351923 A (SEIKO EPSON CORP.) 19 December 2000 (2000-12-19) claims, paragraphs [0036]-[0038], examples 1-7 | 1-14 |
| Y | JP 2018-172500 A (BROTHER INDUSTRIES, LTD.) 08 November 2018 (2018-11-08) claims, examples 1-12 | 1-14 |
| Y | JP 2020-094084 A (ROLAND D G KK) 18 June 2020 (2020-06-18) claims, examples 1-10 | 1-14 |
| Y | JP 2009-286998 A (SEIKO EPSON CORP.) 10 December 2009 (2009-12-10) claims, examples 1-80 | 1-14 |

Form PCT/ISA/210 (continuation of second sheet) (January 2015)

**INTERNATIONAL SEARCH REPORT**
Information on patent family members

International application No.

PCT/JP2021/024106

| Patent Documents referred in the Report | Publication Date | Patent Family | Publication Date |
|---|---|---|---|
| JP 2018-538387 A | 27 Dec. 2018 | WO 2017/069355 A1 claims, examples 5, 6 KR 10-2017-0045683 A CN 108291102 A | |
| CN 105400292 A | 16 Mar. 2016 | (Family: none) | |
| CN 109627848 A | 16 Apr. 2019 | (Family: none) | |
| JP 6-33006 A | 08 Feb. 1994 | US 5462592 A claims, examples 2, 3 | |
| JP 64-69381 A | 15 Mar. 1989 | (Family: none) | |
| JP 61-101572 A | 20 May 1986 | US 4713113 A claims, examples 1-5 GB 2166146 A DE 3537726 A. | |
| JP 61-101574 A | 20 May 1986 | US 4737190 A claims, examples 1-5 GB 2166147 A DE 3537724 A | |
| JP 2005-307184 A | 04 Nov. 2005 | US 2005/0235870 A1 claims, examples 10, 12, 14, 19, 30, 32, 34, 39, 41 | |
| JP 2002-249693 A | 06 Sep. 2002 | (Family: none) | |
| JP 2000-351923 A | 19 Dec. 2000 | (Family: none) | |
| JP 2018-172500 A | 08 Nov. 2018 | US 2018/0282565 A1 claims, examples 1-12 | |
| JP 2020-094084 A | 18 Jun. 2020 | (Family: none) | |
| JP 2009-286998 A | 10 Dec. 2009 | US 2009/0308279 A1 claims, examples 1-80 WO 2009/133711 A1 EP 2284227 A1 CN 102015923 A | |

Form PCT/ISA/210 (patent family annex) (January 2015)

**EP 4 155 355 A1**

**Patent documents cited in the description**

- JP 2004231711 A

- JP 2008246821 A